# EUROPEAN PATENT APPLICATION

(11) **EP 4 258 628 A1**
(43) Date of publication of application: **11.10.2023**
(21) Application number: 21909493.5
(22) Date of filing: 22.12.2021
(51) Int. Cl.: H04L 69/166, H04L 9/00

(54) **METHOD, APPARATUS AND SYSTEM FOR SECURELY TRANSMITTING DATA**

(30) Priority: 25.12.2020 CN 202011566162
(71) Applicant: Huawei Technologies Co., Ltd., Shenzhen, Guangdong 518129 (CN)
(72) Inventor: CHEN, Conger, Shenzhen, Guangdong 518129 (CN); LIANG, Zhijian, Shenzhen, Guangdong 518129 (CN); WEI, Zhigui, Shenzhen, Guangdong 518129 (CN)
(74) Representative: Maiwald GmbH
(86) International application number: PCT/CN2021/140625
(87) International publication number: WO 2022/135498

(57) **Abstract**

Embodiments of the present invention provide a data transmission method and a related apparatus and system. Digital content is protected through encryption and decryption, to implement secure transmission of the digital content. A sending end encrypts a data segment in a data frame based on a frame number and a data number of the sending end to obtain a ciphertext, and the sending end sends the frame number and the ciphertext to a receiving end. The receiving end decrypts the ciphertext based on the frame number and a data number of the receiving end to obtain a plaintext. The data numbers of the sending end and the receiving end have a same initial value, and are updated based on a same rule when data segments in the same data frame are encrypted and decrypted. After all data segments in the data frame are encrypted, the data number of the sending end is reset to the initial value. After ciphertexts of all the data segments in the data frame are decrypted, the data number of the receiving end is reset to the initial value.

## Description

### TECHNICAL FIELD

This application relates to the field of data communication, and more specifically, to a secure data transmission method, apparatus, and system.

### BACKGROUND

With development of multimedia technologies, higher requirements are put forward on security, reliability, stability, and the like of transmission of content such as audio and videos. Especially when data is transmitted between digital interfaces, due to great value of the data, it is important to protect the data and prevent the data from being illegally stolen during transmission.

At present, a method for secure data transmission between digital interfaces is to use a symmetric key for encrypted transmission. A symmetric cryptographic system requires that a sending end and a receiving end use a same key. To be specific, the sending end uses an encryption key to encrypt data into a ciphertext and sends the ciphertext to the receiving end, and the receiving end can decrypt the ciphertext only by using the same key. If a key used by the receiving end is different from the encryption key used by the sending end, the decryption fails, causing poor experience such as erratic display. Therefore, the encryption key of the sending end needs to be completely synchronized with the decryption key of the receiving end, to ensure that the receiving end can correctly decrypt the received encrypted data.

According to the method in the conventional technology, the sending end encrypts the data in units of data segments, and the receiving end decrypts ciphertexts of the data segments one by one. To implement key synchronization between the sending end and the receiving end, each time the sending end encrypts a data segment, the sending end updates, according to a predetermined rule, a parameter for generating the key, for example, a data number. Each time the receiving end decrypts a ciphertext, the receiving end also updates, according to a predetermined rule the same as that of the sending end, a parameter for generating the key. Because the parameters used by the sending end and the receiving end to generate the keys are updated according to the same rule in one encryption and decryption process, the encryption key of the sending end and the decryption key of the receiving end can be synchronized. However, in an actual data transmission process, data loss is inevitable. Once a ciphertext is lost, the parameters of the sending end and the receiving end cannot be synchronized. Consequently, the key generated by the receiving end cannot be synchronized with that generated by the sending end, leading to a decryption error. More importantly, once a decryption error occurs, all subsequent ciphertexts are incorrectly decrypted until the sending end performs re-authentication on an identity of the receiving end and negotiates a new session key (SessionKey).

### SUMMARY

In view of this, this application provides a data transmission method and a related apparatus and system, to encrypt and decrypt data, to implement secure data transmission, and quickly recover correct decryption when a decryption error occurs.

According to a first aspect, this application provides a data transmission method, applicable to a secure data transmission scenario, for example, sharing content of a personal computer to a larger screen, connecting a computer to a projector for projection, connecting a desktop computer host to a display for display, or connecting a video disc player to a television to play a CD/DVD. The method includes: A sending end sends a frame number to a receiving end, where the frame number indicates a data frame, and the data frame includes a plurality of data segments that include a data segment X; the sending end further sends a ciphertext of the data segment X to the receiving end, where the ciphertext of the data segment X is obtained by encrypting the data segment X based on the frame number and a data number of the sending end, the data number of the sending end has an initial value, the data number of the sending end is updated according to a predetermined rule after the data segment X is encrypted, and after all the data segments in the data frame are encrypted, the data number of the sending end is reset to the initial value; the receiving end receives the frame number and the ciphertext of the data segment X; and the receiving end decrypts the ciphertext of the data segment X based on the frame number and a data number of the receiving end to obtain a plaintext of the data segment X, where the data number of the receiving end has an initial value the same as that of the data number of the sending end, the data number of the receiving end is updated according to the predetermined rule after the ciphertext of the data segment X is decrypted, and after ciphertexts of all the data segments in the data frame are decrypted, the data number of the receiving end is reset to the initial value.

In a symmetric encryption method such as an AES, a frame number and a data number are for generating a keystream, where synchronization of the keystream between a sending end and a receiving end is a key for the receiving end to correctly decrypt data. Therefore, accurately synchronizing the frame number and the data number by the sending end and the receiving end is a basis for the receiving end to correctly decrypt the data.

In a process of transmitting a data frame, once a ciphertext of at least one data segment is lost, a data number used by the receiving end for decryption cannot correctly correspond to the decrypted ciphertext. In other words, the data number used by the receiving end for decryption is misplaced with a data number used by the sending end for encryption. In the data transmission method provided in this application, if the foregoing displacement between data numbers occurs in a process of transmitting a data frame, when a next data frame is transmitted, the data numbers of the receiving end and the sending end are reset to a same initial value. In other words, the data numbers of the two ends are resynchronized. The data numbers of the two ends are then updated according to the same predetermined rule, to ensure that the data numbers for encryption and decryption are consistent.

In other words, in a process of transmitting a data frame, once frame numbers or data numbers of the receiving end and the sending end are not synchronized, the data transmission method provided in this application can ensure that both the frame numbers and the data numbers of the sending end and the receiving end can be resynchronized when a next data frame is transmitted, thereby ensuring that the receiving end generates an accurate keystream to decrypt data.

In addition, according to the data transmission method provided in this application, intra-frame counting is performed on a frame number and a data number with small quantities of transmitted bytes. When a decryption error occurs, the connection between the sending end and the receiving end does not need to be disconnected first to perform re-authentication on the identity and negotiate the session key, to implement resynchronization between the frame number and the data number, and further reduce communication overheads and time overheads of resynchronization.

Further, according to the data transmission method provided in this application, a decryption error is limited to one data frame, and correct decryption is quickly recovered, so that impact of the decryption error on a user can be reduced, and a problem such as erratic display can be avoided. Normal data transmission is even recovered before the user perceives the decryption error. This can effectively improve user experience.

According to a second aspect, this application provides a data transmission method, applied to an electronic device such as a computer, a set-top box, or a video disc player, where the electronic device has functions of encrypting data and sending data. The method includes: sending a frame number, where the frame number indicates a data frame, and the data frame includes one or more unencrypted data segments that include a data segment X; and sending a ciphertext of the data segment X, where the ciphertext of the data segment X is obtained by encrypting the data segment X based on the frame number and a data number, the data number has an initial value, the data number is updated according to a predetermined rule after the data segment X is encrypted, and after all the data segments in the data frame are encrypted, the data number is reset to the initial value.

In the data transmission method provided in this application, when sending a data frame, the sending end sends a frame number to the receiving end, to ensure that the frame number can be resynchronized in time even if the frame number of the receiving end is not synchronized with that of the sending end due to various cases such as ciphertext loss in the transmission process.

In a possible implementation, the data segment X is the first encrypted data segment in the plurality of data segments, and the initial value of the data number is for encrypting the data segment X.

In a possible implementation, the data segment X is not the first encrypted data segment in the plurality of data segments, an updated value of the data number is for encrypting the data segment X, and the updated value of the data number is obtained through updating based on the initial value according to the predetermined rule.

According to the data transmission method provided in this application, a decryption error is limited to one data frame, and correct decryption is quickly recovered, so that impact of the decryption error on a user can be reduced, and a problem such as erratic display can be avoided. Normal data transmission is even recovered before the user perceives the decryption error. This can effectively improve user experience.

In a possible implementation, the method further includes: generating an initialization vector based on the frame number and the data number; and encrypting the data segment X based on the initialization vector to obtain the ciphertext of the data segment X.

In a possible implementation, the generating an initialization vector based on the frame number and the data number includes: concatenating the frame number and the data number to obtain a counter; and concatenating the counter and a pre-generated random number to obtain the initialization vector. The counter is an input of an encryption module, for example, an AES module working in counter (Counter, CTR) mode, and is a code stream or bitstream of a specific length (for example, 64 bits).

In a possible implementation, the encrypting the data segment X based on the initialization vector to obtain the ciphertext of the data segment X includes: inputting the initialization vector and a session key into an advanced encryption standard AES unit to obtain a keystream; and performing an exclusive OR operation on the keystream and the data segment X to obtain the ciphertext of the data segment X.

In a possible implementation, when a value of the data number is equal to a first threshold, it indicates that all the data segments in the data frame are encrypted. In other words, whether all data segments in a data frame are encrypted can be determined based on a value of a data number. The first threshold may be set based on a quantity of data segments included in the data frame. For example, it is assumed that the data frame includes 100 data segments, the initial value of the data number is 0, and each time a data segment is encrypted, the data number is increased by 1. When the data number is equal to 99, it means that 100 encryption operations have been performed, and all the 100 data segments included in the data frame are encrypted.

In a possible implementation, the quantity of data segments included in the data frame is fixed, and it may be determined, based on a quantity of encrypted data segments, that all the data segments in the data frame are encrypted. For example, when the quantity of encrypted data segments or a quantity of encryption times is equal to the quantity of data segments included in the data frame, it indicates that all the data segments in the data frame are encrypted. The quantity of encrypted data segments or the quantity of encryption times may be counted through a separate counter, or may be obtained through conversion based on the data number.

According to a third aspect, this application provides a data transmission method, applied to an electronic device such as a television, a computer, a projector, a display, or a smart screen, where the electronic device has functions of receiving data and decrypting data. The method includes: receiving a frame number, where the frame number indicates a data frame, and the data frame includes one or more data segments that include a data segment X; receiving a ciphertext of the data segment X; and decrypting the ciphertext of the data segment X based on the frame number and a data number to obtain a plaintext of the data segment X, where the data number has an initial value, the data number is updated according to a predetermined rule after the ciphertext of the data segment X is decrypted, and after ciphertexts of all the data segments in the data frame are decrypted, the data number is reset to the initial value.

With reference to the data transmission method in the third aspect, in a possible implementation, the method further includes: if the ciphertext of the data segment X fails to be decrypted, discarding other ciphertexts received subsequently until another frame number is received. Because the data number and/or the frame number are updated according to the predetermined rule, once a decryption error occurs, it means that ciphertexts of all remaining data segments in the data frame cannot correspond to correct data numbers and/or frame numbers. In other words, it may be determined that the ciphertexts of all the remaining data segments in the data frame cannot be correctly decrypted. In this case, other ciphertexts received subsequently are directly discarded, to prevent the receiving end from decrypting the ciphertexts that cannot be correctly decrypted, so that computing resources of the receiving end can be saved. However, after another frame number is received, it means that the sending end has encrypted all data segments in the data frame. Therefore, the frame numbers and the data numbers at the two ends are resynchronized, and the receiving end resumes a normal decryption operation, and decrypts the data frame corresponding to the another frame number.

According to a fourth aspect, this application further provides a data transmission method, applied to an electronic device such as a computer, a set-top box, or a video disc player, where the electronic device has functions of encrypting data and sending data. The method includes: sending a frame number and a data number, where the frame number indicates a data frame, and the data frame includes a plurality of unencrypted data segments that include a data segment X; and sending a ciphertext of the data segment X, where the ciphertext of the data segment X is obtained by encrypting the data segment X based on the frame number and the data number, the data number has an initial value, and the data number is updated according to a predetermined rule after the data segment X is encrypted.

With reference to the data transmission method in the fourth aspect, in a possible implementation, the frame number and the data number are sent simultaneously. In other words, when a ciphertext of each data segment is sent, the frame number and the data number are sent. When ciphertexts of all the data segments in the data frame are sent, the frame numbers are the same, and each time a ciphertext of a data segment is sent, the data number is updated according to the predetermined rule. The frame number and the data number may be encapsulated in an encrypted information header and sent together with the ciphertext. The encrypted information header and the ciphertext may alternatively be sent separately.

With reference to the data transmission method in the fourth aspect, in a possible implementation, the frame number and the data number are sent separately. Specifically, each time a data frame is sent, the frame number is sent once; and each time each data segment in the data frame is sent, the data number is sent once. Each time a ciphertext of a data segment is sent, the data number is updated according to the predetermined rule.

According to the data transmission method provided in the fourth aspect, when a decryption error occurs, correct decryption can be recovered more quickly. In other words, correct decryption is immediately recovered in a next data segment, to further improve reliability and fault tolerance during data transmission.

According to a fifth aspect, this application further provides a data transmission system, including a sending apparatus and a receiving apparatus. The sending apparatus is configured to perform the data transmission method performed by the sending end in the first aspect, and the receiving apparatus is configured to perform the data transmission method performed by the receiving end in the first aspect.

According to a sixth aspect, this application further provides an electronic device. The electronic device is configured to perform the data transmission method according to any one of the second aspect and/or the third aspect.

According to a seventh aspect, this application further provides an electronic device. The electronic device is configured to perform the data transmission method according to the fourth aspect.

According to an eighth aspect, this application further provides a computer apparatus. The computer apparatus includes a memory, a processor, and a computer program stored in the memory. When the computer program is executed by the processor, the computer apparatus performs the data transmission method according to any one of the second aspect and/or the third aspect.

According to a ninth aspect, this application further provides a computer apparatus. The computer apparatus includes a memory, a processor, and a computer program stored in the memory. When the computer program is executed by the processor, the computer apparatus performs the data transmission method according to the fourth aspect.

According to a tenth aspect, this application further provides a computer-readable storage medium. The computer-readable storage medium includes a computer program or instructions. When the computer program or the instructions are run on a computer, the computer is enabled to perform the data transmission method according to any one of the second aspect and/or the third aspect.

According to an eleventh aspect, this application further provides a computer-readable storage medium. The computer-readable storage medium includes a computer program or instructions. When the computer program or the instructions are run on a computer, the computer is enabled to perform the data transmission method according to the fourth aspect.

According to a twelfth aspect, this application further provides a computer program product. The computer program product includes a computer program or instructions, and when the computer program or the instructions are run on a computer, the computer is enabled to perform the data transmission method according to any one of the second aspect and/or the third aspect.

According to a thirteenth aspect, this application further provides a computer program product. The computer program product includes a computer program or instructions. When the computer program or the instructions are run on a computer, the computer is enabled to perform the data transmission method according to the fourth aspect.

According to a fourteenth aspect, this application further provides a circuit system. The circuit system includes a processing circuit, and the processing circuit is configured to perform the data transmission method according to any one of the second aspect and/or the third aspect.

According to a fifteenth aspect, this application further provides a circuit system. The circuit system includes a processing circuit, and the processing circuit is configured to perform the data transmission method according to the fourth aspect.

### BRIEF DESCRIPTION OF DRAWINGS

To describe the technical solutions in embodiments of this application more clearly, the following briefly describes the accompanying drawings used in embodiments of this application.
FIG. 1 is a schematic diagram of an architecture of a secure data transmission system according to an embodiment of this application;
FIG. 2 is a schematic diagram of a structure of a sending end 100 according to an embodiment of this application;
FIG. 3 is a schematic diagram of data division according to an embodiment of this application;
FIG. 4 is a schematic flowchart of secure data transmission according to an embodiment of this application;
FIG. 5 is a schematic diagram of a format of an encrypted information header including a frame number according to an embodiment of this application;
FIG. 6 is a schematic flowchart of negotiating a session key and a random number by a sending end 100 and a receiving end 200 according to an embodiment of this application;
FIG. 7 is a schematic flowchart of generating an initialization vector according to an embodiment of this application;
FIG. 8 is a schematic flowchart in which a sending end encrypts a plaintext by using an initialization vector and a session key to obtain a ciphertext according to an embodiment of this application;
FIG. 9 is a schematic flowchart in which a receiving end decrypts a ciphertext by using an initialization vector and a session key to obtain a plaintext according to an embodiment of this application;
FIG. 10 is a schematic diagram of a method for obtaining a data number according to an embodiment of this application;
FIG. 11 is a schematic diagram of a method for obtaining a frame number according to an embodiment of this application;
FIG. 12 is a schematic diagram of a structure of an electronic device according to an embodiment of this application;
FIG. 13 is a schematic diagram of a structure of a circuit system according to an embodiment of this application; and
FIG. 14 is a schematic diagram of a structure of a server 300 according to an embodiment of this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application. It should be understood that embodiments of the present invention may be used in other aspects, and may include structural or logical changes not depicted in the accompanying drawings.

For example, it should be understood that a disclosure in connection with a described method may also hold true for a corresponding device or system configured to perform the method and vice versa. For example, if one or a plurality of specific method steps are described, a corresponding device may include one or a plurality of units, for example, functional units, to perform the described one or plurality of method steps (for example, one unit performing the one or plurality of steps, or a plurality of units each performing one or more of the plurality of steps), even if such one or more units are not explicitly described or illustrated in the figures. In addition, for example, if a specific apparatus is described based on one or more units such as a functional unit, a corresponding method may include one step for implementing functionality of one or more units (for example, one step for implementing functionality of one or more units; or a plurality of steps, each of which is for implementing functionality of one or more units in a plurality of units), even if such one or more of steps are not explicitly described or illustrated in the accompanying drawings. Further, it is understood that the features of the various example embodiments and/or aspects described herein may be combined with each other, unless specifically noted otherwise.

The terms "first" and "second" mentioned below are merely intended for a purpose of description, and shall not be understood as an indication or implication of relative importance or implicit indication of the quantity of indicated technical features. Therefore, a feature limited by "first" or "second" may explicitly indicate or implicitly include one or more such features. In the description of embodiments of this application, unless otherwise stated, "a plurality of" means two or more than two.

A specific scenario in which the technical solutions provided in embodiments of this application may be applied is first described. A set-top box is connected to a television through an HDMI data cable, to play audio and video content on the television. The set-top box first encrypts the audio and video content that needs to be played, and then transmits the encrypted audio and video content to the television through the HDMI data cable. The television decrypts the received encrypted audio and video content and then presents the encrypted content. The technical solutions provided in embodiments of this application may further be applied to more scenarios in which data needs to be transmitted, for example, sharing content of a personal computer to a larger screen, connecting a computer to a projector for projection, connecting a desktop computer host to a display for display, and connecting a video disc player to a television to play a CD/DVD.

Embodiments of this application provide a secure data transmission method. When encrypted data is transmitted, a sending end sends a frame number, so that a receiving end can quickly recover from a decryption fault, to improve reliability of secure data transmission and provide better user experience.

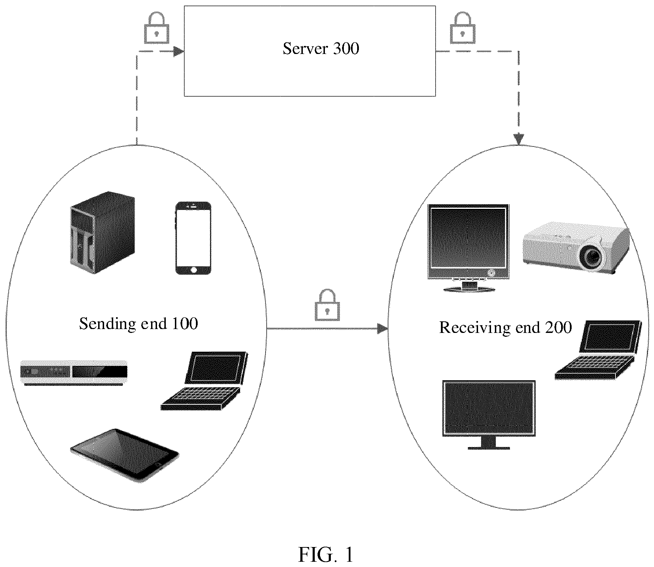

FIG. 1 is a schematic diagram of an architecture of a secure data transmission system according to an embodiment of this application. As shown in FIG. 1, the system includes at least a data sending end 100 and a data receiving end 200. The sending end 100 may communicate with the receiving end 200 in a wired and/or wireless manner (which is described in detail below). The sending end 100 sends encrypted data, and the receiving end 200 receives the encrypted data and performs decryption.

The sending end 100 is an apparatus having data sending and encryption capabilities. For example, the sending end 100 may be an electronic device such as a tablet computer, a notebook computer, a desktop computer host, a set-top box, a video disc player, a mobile phone, an e-reader, a digital board, a digital conference system, a wearable intelligent device (for example, a smartwatch), a camera, a personal digital assistant (personal digital assistant, PDA), or a vehicle-mounted device, or any combination thereof. In a possible implementation, the sending end 100 may be equipped with iOS^{®}, Android^{®}, Microsoft^{®}, Linux°, or another operating system. Certainly, a specific form of the sending end 100 is not limited in the following embodiments.

The receiving end 200 is an apparatus having data receiving and decryption capabilities, and is, for example, various display devices that can display data, such as a display, a television, a projector, a smart screen, a tablet computer, a notebook computer, a desktop computer host, a set-top box, an e-reader, a digital board, a digital conference system, a mobile phone, a wearable intelligent device (for example, a smartwatch), a network video recorder (network video recorder, NVR)/digital video recorder (digital video recorder, DVR), a video surveillance system, a PDA, a vehicle-mounted device, and other electronic devices, or any combination thereof. In a possible implementation, the receiving end 200 may be equipped with iOS°, Android°, Microsoft°, Linux^{®}, or another operating system. Certainly, a specific form of the receiving end 200 is not limited in the following embodiments.

It may be understood that, in some scenarios, the roles of the sending end and the receiving end may be interchanged. In other words, the sending end may perform an operation of the receiving end, and the receiving end may perform an operation of the sending end. In some scenarios, the roles of the sending end and the receiving end may be integrated on a same electronic device, for example, a converter. The device may receive encrypted data and decrypt the data, or may encrypt data and then send the encrypted data.

Optionally, the secure data transmission system may further include a server 300. The sending end 100 encrypts data and then sends the encrypted data to the server 300. The server 300 then sends the encrypted data to the receiving end 200. The server 300 may include one or more devices connected to a local area network (local area network, LAN) or a wide area network (wide area network, WAN), and the sending end 100 and the receiving end 200 may access the server 300 through a network. Certainly, a specific form of the server 300 is not limited in the following embodiments.

In a possible implementation, after receiving encrypted data sent by the sending end 100, the server 300 does not decrypt the data, but temporarily stores the received encrypted data, and sends the stored encrypted data to the receiving end 200 when receiving a data request from the receiving end 200.

In another possible implementation, after receiving encrypted data sent by the sending end 100, the server 300 first decrypts the data and then stores the data (for example, so that the server 300 supports a query function), and encrypts, when receiving a data request from the receiving end 200, the stored data and then sends the encrypted data to the receiving end 200.

In a possible implementation, the server 300 may be further configured to control and manage interaction actions such as identity authentication and session key exchange between the sending end 100 and the receiving end 200, to ensure that secure communication is established between the sending end 100 and the receiving end 200. During authentication, the server 300 may be configured to distribute a session key, and after communication is established between the sending end 100 and the receiving end 200, the server 300 may be further configured to update the session key for encryption. In addition, the server 300 may further maintain a whitelist. The whitelist includes a list of authenticated receiving ends that can receive encrypted data, and a status corresponding to each receiving end. In an embodiment, the sending end 100 may access the whitelist maintained by the server 300, and request to establish secure communication with at least one receiving end in the whitelist.

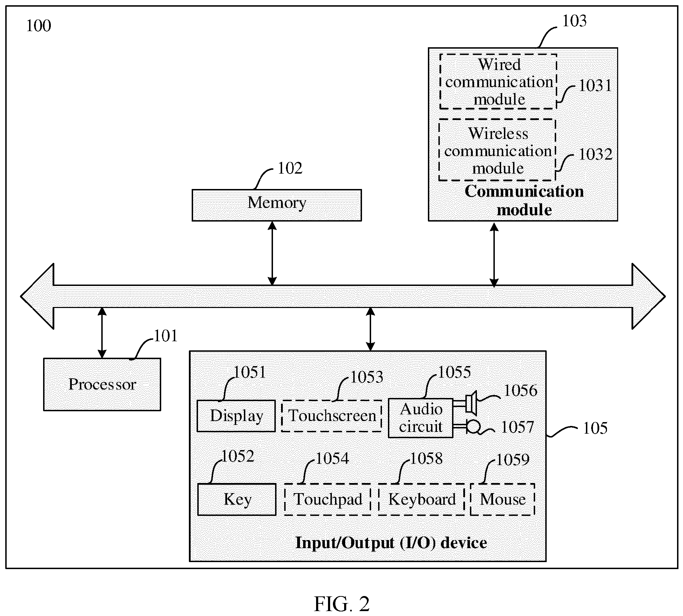

The following describes an example structure of the sending end 100 in detail with reference to FIG. 2. As shown in FIG. 2, the sending end 100 includes at least a processor 101, a memory 102, and a communication module 103. A person skilled in the art may understand that a hardware structure shown in FIG. 2 does not constitute a limitation on the sending end 100. The sending end 100 may include more or fewer components than those shown in the figure, or combine some components, or have different component arrangements.

In the sending end 100, the processor 101 is a control center of the sending end 100. For example, the processor 101 can control whether the sending end 100 encrypts data before transmission. The processor 101 may interact with another component of the sending end 100 through various interfaces, a support circuit, and a bus, and the support circuit may be integrated with the processor 101. In an embodiment, the processor 101 is implemented as one or more processors, one or more controllers, and/or another structure that may be configured to execute a program. For example, the processor 101 may further include at least one of a general purpose processor, a digital signal processor (DSP), an application-specific integrated circuit (ASIC), a field programmable gate array (FPGA), or another programmable logic component. The general purpose processor may include a processor based on an architecture such as x86 or ARM, a microprocessor, a controller, a microcontroller, or a state machine. The processor 101 may alternatively be implemented as a computing component, for example, a combination of the DSP and the microprocessor.

The memory 102 stores computer programs such as an operating system and an application program. The processor 101 is configured to execute a computer program in the memory 102, to implement a function defined by the computer program. For example, the processor 101 executes an encryption program, to encrypt data. The memory 102 further stores other data in addition to the computer programs, for example, data generated in a running process of the operating system and the application program, and data before and after encryption. The memory 102 is a non-volatile storage medium, and generally includes an internal memory and an external memory. The internal memory includes, but is not limited to, a random access memory (random access memory, RAM), a read-only memory (read-only memory, ROM), a cache (cache) or the like. The external memory includes, but is not limited to, a flash memory (flash memory), a hard disk, a compact disc, a universal serial bus (universal serial bus, USB) flash drive, or the like. The computer program is generally stored in the external memory. Before executing a computer program, the processor loads the program from the external memory to the internal memory.

The memory 102 may be independent, and is connected to the processor 101 through a bus. Alternatively, the memory 102 and the processor 101 may be integrated into a chip subsystem.

The communication module 103 may include any similar apparatus such as a transceiver configured to perform wired and/or wireless communication with another device or a communication network. A wired communication module 1031 may include a serial and/or parallel wired medium, for example, Ethernet, a universal serial bus (universal serial bus, USB), a FireWire (FireWire), a digital visual interface (digital visual interface, DVI), a high-definition multimedia interface (high-definition multimedia interface, HDMI), a video graphics array (video graphics array, VGA) interface, a gigabit video interface (gigabit video interface, GVIF), and a unified display interface (unified display interface, UDI).

A wireless communication module 1032 may include a communication module that provides a wireless local area network (wireless local area network, WLAN) communication function, for example, a wireless fidelity (wireless fidelity, Wi-Fi) module, or may include a communication module that provides wireless communication functions such as Bluetooth (Bluetooth, BT), global navigation satellite system (global navigation satellite system, GNSS), frequency modulation (frequency modulation, FM), near field communication (near field communication, NFC), and infrared (infrared, IR). The wireless communication module 1032 may further include a mobile communication module that provides a mobile communication capability such as 2G/3G/4G/5G. The mobile communication module that provides the mobile communication capability may include at least one filter, a switch, a power amplifier, a low noise amplifier (low noise amplifier, LNA), and the like.

The wireless communication module 1032 may be one or more components integrating at least one communication module. In some embodiments, at least some functional modules of the wireless communication module 1032 may be disposed in the processor 101. In some embodiments, at least some functional modules of the wireless communication module 1032 and at least some modules of the processor 101 may be integrated in a same device. The wireless communication module 1032 receives an electromagnetic wave through an antenna, demodulates and filters an electromagnetic wave signal, and sends the processed signal to the processor 101. The wireless communication module 1032 may further receive a to-be-sent signal from the processor 101, perform frequency modulation and amplification on the signal, and convert the signal into an electromagnetic wave for radiation through the antenna.

In a possible implementation, the sending end 100 further includes an input/output (I/O) device 105, and the I/O device includes two parts: an output device and an input device.

The output device includes, but is not limited to, a display 1051, an audio circuit 1055, and the like.

The display (also referred to as a display screen) 1051 is configured to display information entered by a user or information displayed to a user. The display may be configured in a form, for example, a liquid crystal display or an organic light-emitting diode. The display may be a built-in display integrated with another component of the sending end 100, or may be an external display connected in a wired or wireless manner.

The audio circuit 1055, a speaker 1056, and a microphone 1057 can provide an audio interface between the user and the sending end 100. The audio circuit 1055 may transmit, to the speaker 1056, an electrical signal converted from received audio data, and the speaker 1056 converts the electrical signal into a sound signal for output. In another aspect, the microphone 1057 converts the collected sound signal into an electrical signal, and the audio circuit 1055 receives the electrical signal, converts the electrical signal into audio data, and then sends the audio data to, for example, another electronic device, through the communication module, or outputs the audio data to the memory 102 for further processing.

The input device may include a key 1052. The key 1052 may be a physical key integrated on the sending end 100, for example, a control key on the set-top box, or may be an external key connected in a manner such as infrared communication, for example, a remote control configured to control a television. The user may control power-on and power-off of the sending end 100 through the key, or may control the sending end 100 to perform another operation through the key.

Optionally, the input device of the sending end 100 may further include a touchscreen 1053. For example, an electronic device such as a mobile phone or a tablet computer may acquire user input (for example, an operation performed by the user on the touchscreen 1053 or near the touchscreen 1053 through any suitable object such as a finger or a stylus) through the touchscreen 1053, and send an acquired touch event to another component (for example, the processor 101). The touchscreen 1053 may be implemented in a plurality of types, such as a resistive type, a capacitive type, an infrared type, and a surface acoustic wave type. In a possible implementation, the touchscreen 1053 and the display 1051 are integrated into one component.

Optionally, the input device of the sending end 100 may further include a touchpad 1054, a keyboard 1058, a mouse 1059, and the like. For example, the notebook computer may control an action of a pointer by sensing movement of a finger of the user through the touchpad 1054. The keyboard 1058 may be a keyboard integrated with the sending end 100, for example, a keyboard provided with the notebook computer, or may be an external keyboard connected to the sending end 100 in a manner such as Bluetooth, a network, or a wired manner to provide input for the sending end 100.

In addition, voice input may also be performed through the audio circuit 1055.

A structure of the receiving end 200 is the same as or similar to that of the sending end 100. Details are not described herein again. Similarly, a person skilled in the art may understand that the hardware structure shown in FIG. 2 does not constitute a limitation on the receiving end 200, and the receiving end 200 may include more or fewer components than those shown in the figure, or combine some components, or have different component arrangements.

According to the secure data transmission method provided in this application, after a secure communication connection is established between the sending end and the receiving end, data is encrypted by using data segments of a specific length (for example, 128 bits) as units. After receiving the encrypted data, the receiving end separately decrypts the encrypted data, and then combines the encrypted data in a specific order. In other words, in the encryption and decryption process, the data may be divided into a plurality of data segments. For ease of understanding, the following first describes a case of data segmentation.

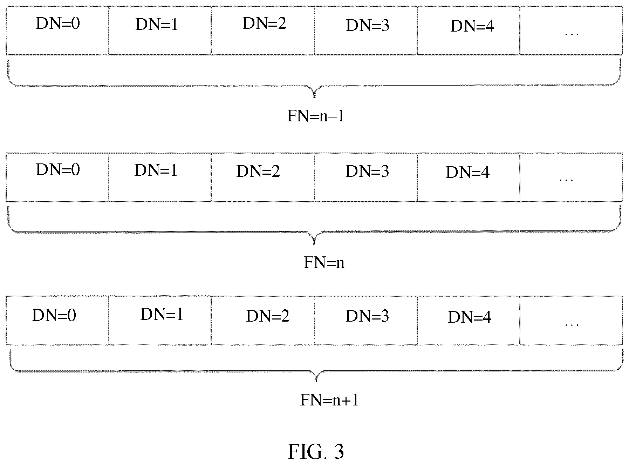

FIG. 3 shows an example of data segmentation. Data division includes two levels. The first level is to divide data into a plurality of data frames of a fixed length. For example, the data is divided into a plurality of data frames of a specific length (where the length may be a general length, or may be a length specified by a user) in a specific order (for example, a content order). The second level is to further divide each frame into a plurality of data segments of a fixed length. For example, each data frame is divided into a plurality of data segments of a fixed length (for example, 128 bits) in an encryption order.

Each data frame may be indicated by a frame number (frame number, FN). In an embodiment, the frame number may be a unique identifier of the data frame. For example, the sending end may allocate a unique identifier (for example, n-1, n, or n+1 in FIG. 3) to each data frame according to a predetermined rule, to distinguish between different data frames. The receiving end may also allocate a frame number to each data frame according to the same predetermined rule, to ensure that frame numbers of a same data frame are consistent in an encryption process of the sending end and in a decryption process of the receiving end.

In another embodiment, the sending end may initialize a frame number of the first data frame encrypted by the sending end to a fixed value, and then update the value of the frame number according to a predetermined rule, for example, adding 1, each time a frame is encrypted. Correspondingly, the receiving end may initialize a number of the first data frame decrypted by the receiving end to the same fixed value as the sending end, and then update the value of the frame number according to the same predetermined rule as the sending end each time a frame is decrypted. In this way, the sending end and the receiving end can synchronize the frame numbers. In an embodiment, when the foregoing fixed value is 0, and the predetermined rule is incrementing by 1, the frame number of the first data frame encrypted by the sending end is 0, and after the first data frame is encrypted, a number of the second data frame encrypted by the sending end is incremented to 1, and so on. Correspondingly, the frame number of the first data frame decrypted by the receiving end is also 0, and after the first data frame is decrypted, a number of the second data frame decrypted by the receiving end is also incremented to 1 based on the same rule, and so on. It can be learned that in this case (where the initial value of the frame number is 0), for the sending end, the data frame number indicates a quantity of data frames that have been encrypted by the sending end; and for the receiving end, the data frame number indicates a quantity of data frames that have been decrypted by the receiving end. Alternatively, a random number/pseudo random number may be generated as the initial value of the frame number of the first frame.

In a possible implementation, frame numbers of adjacent data frames are associated to a certain extent. After a frame number of a specific data frame is known, a frame number of a next data frame can be obtained according to a predetermined rule. In a possible embodiment, the frame number of the next data frame is the frame number of the current data frame plus a predetermined value, for example, plus 1 shown in FIG. 3, or plus a non-negative number in a range indicated by any other FN.

Because each data frame is encrypted at the sending end by using data segments of a specific length as units, to distinguish between a plurality of data segments that are encrypted in an order in a same data frame, the sending end indicates different data segments of the same data frame (or encryption operations on different data segments in the same data frame) through data numbers (data numbers, DNs). Similarly, each data frame is also decrypted at the receiving end by using data segments of a specific length as units. To distinguish between a plurality of data segments that are decrypted in an order in a same data frame, the receiving end also indicates different data segments in the same data frame (or decryption operations on different data segments in the same data frame) through data numbers.

In a possible implementation, the sending end may allocate a unique identifier (for example, 0, 1, 2, 3, 4, or the like in FIG. 3) to each data segment in a same data frame according to a predetermined rule, to distinguish between different data segments. The receiving end may also allocate an identifier to each data segment in a same data frame according to the same predetermined rule, to distinguish between different data segments.

In a possible implementation, the sending end and the receiving end each maintain a data number, to distinguish between different data segments in a same data frame. Before encrypting the first data segment in each data frame, the sending end resets the data number to an initial value, where the initial value is a fixed value, for example, 0 shown in FIG. 3, or another value. This is not limited in the present invention. Each time a data segment is encrypted, the sending end updates the value of the data number according to a predetermined rule, for example, adding 1 or any other positive number. Correspondingly, when decrypting the first data segment in each data frame, the receiving end resets the data number maintained by the receiving end to the same initial value as the sending end, and then updates the value of the data number of the receiving end according to the same predetermined rule as the sending end each time a data segment is decrypted. In an embodiment, when the initial value is 0 and the predetermined rule is incrementing by 1, and the sending end encrypts the first data segment in the data frame, the value of the data number maintained by the sending end is 0, and after the first data frame segment is encrypted, the data number maintained by the sending end is incremented to 1, and so on. After all data segments of the data frame are encrypted, the sending end resets the data number to the initial value. Correspondingly, when the receiving end decrypts the first data segment in the data frame, the value of the data number maintained by the receiving end is also 0, and after the first data segment is decrypted, the data number maintained by the receiving end is also incremented to 1 based on the same rule, and so on. After all data segments of the data frame are decrypted, the receiving end resets the data number to the initial value.

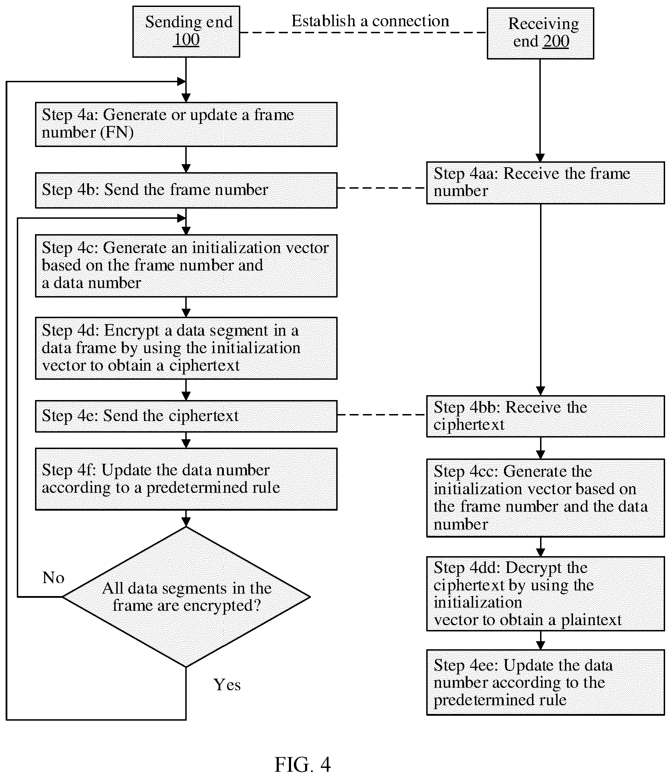

FIG. 4 shows a main process of a secure data transmission method according to an embodiment of this application by using encryption and sending of a data segment as an example. With reference to FIG. 4, the following describes in detail the secure data transmission method according to an embodiment of this application.

**4a:** A sending end 100 generates or updates a frame number. For a definition of the frame number, refer to the foregoing embodiment.

In a possible implementation, before sending a new data frame, the sending end 100 generates a new frame number, where the new frame number may indicate the new data frame to be sent. In another possible implementation, before sending a new data frame, the sending end 100 updates the frame number, where the updated frame number indicates the new data frame to be sent.

**4b:** The sending end 100 sends the frame number to a receiving end 200, so that the frame number is synchronized between the sending end 100 and the receiving end 200. In a possible implementation, the sending end 100 does not directly send the frame number to the receiving end 200, but first sends the frame number to a server 300, and then the server 300 sends the frame number to the receiving end 200.

In a possible implementation, the sending end 100 encapsulates the frame number in an encrypted information header for sending. For example, before transmitting a data frame, the sending end 100 generates an encrypted information header, where the encrypted information header includes a frame number that indicates the data frame.

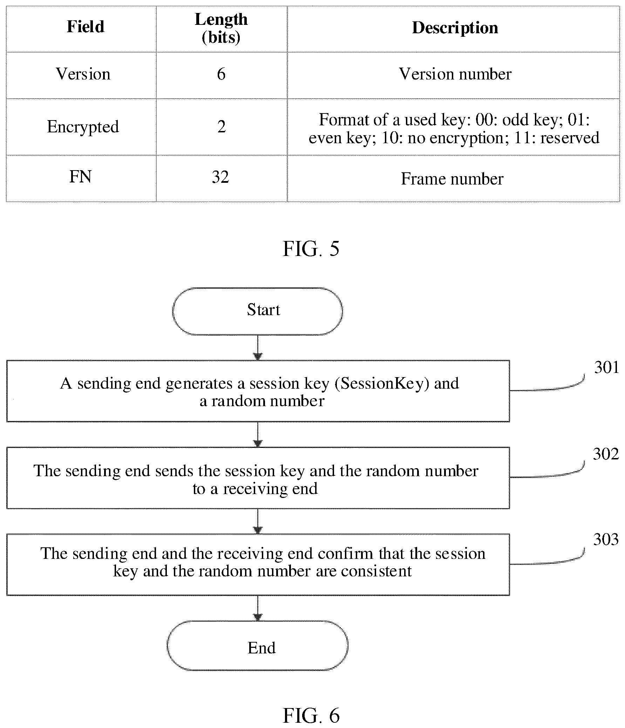

FIG. 5 shows a schematic structure of an encrypted information header. As shown in FIG. 5, in an embodiment, the encrypted information header may include the following fields:
Version field: The version field has a fixed length of 6 bits (6 bits) and describes a version number of the information header. In a possible implementation, the version number of the information header described in the version field may be consistent with a version number of a used encryption and decryption standard.

Encrypted field: The encrypted field has a fixed length of 2 bits (2 bits) and describes a format of a key for encryption. In a possible implementation, 00 indicates that an odd key is used, 01 indicates an even key, 10 indicates that encryption is not performed, and 11 is used as a reserved field.

Frame number (frame number, FN) field: The FN field has a length of 8 bits (8 bits) or an integer multiple of 8 bits. The minimum length is 8 bits and the maximum length is 128 bits. The FN field is for describing a frame number.

Optionally, the encrypted information header may further include a DN (data number) field with a length of an integer multiple of 8 bits (8 bits). The minimum length is 8 bits, and the maximum length is 120 bits. The DN field is for describing a data number.

In a possible implementation, only the FN field is a field that is necessarily included in the encrypted information header, and the remaining fields are all optional fields.

**4aa:** The receiving end 200 receives the frame number sent from the sending end 100.

**4c:** The sending end 100 generates an initialization vector (initialization vector, IV) by using the frame number and the data number. Synchronization of the initialization vector between the sending end 100 and the receiving end 200 is a key to data encryption and correct decryption.

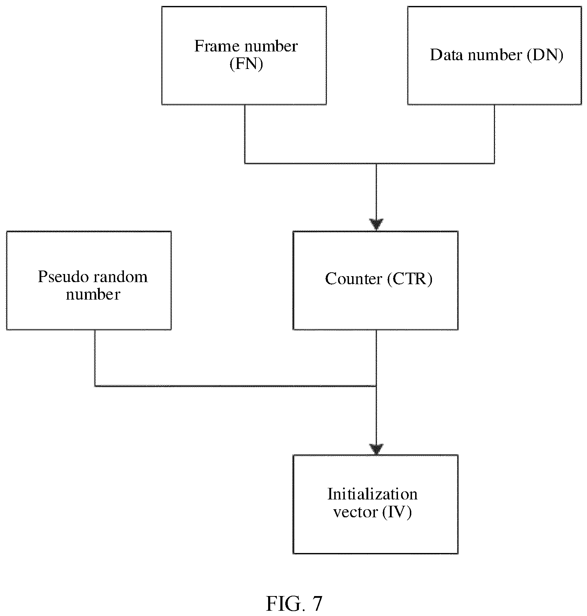

The following describes in detail how to generate the initialization vector with reference to FIG. 7. In a possible implementation, the initialization vector includes three parts: the frame number, the data number, and a random number. First, a counter (counter, CTR) may be obtained by concatenating the frame number and the data number. In a data transmission process, the core of synchronizing a keystream between the sending end 100 and the receiving end 200 is to synchronize the counter. The counter and the random number are then concatenated to obtain the initialization vector. Concatenating two strings is to connect the two strings end to end to form a string jointly. During the concatenation, characters and orders in the two strings are not changed.

In a possible implementation, the random number for generating the initialization vector is obtained through negotiation between the sending end and the receiving end (where a specific process is described in the embodiment related to FIG. 6). For example, the random number for generating the initialization vector is generated by the sending end 100. In a process of negotiating the session key and the random number with the receiving end 200, the sending end 100 sends the random number to the receiving end 200. The two ends jointly determine the random number for generating the initialization vector. In another possible implementation, the random number is generated by the server 300 and sent to the sending end 100 and the receiving end 200.

In a possible implementation, the data numbers are generated or set at the sending end 100 and the receiving end 200 respectively, but the data numbers of the two ends are determined according to a same predetermined rule (where a specific example is described in the embodiment related to FIG. 3).

In another possible implementation, the data number is obtained by the sending end 100 according to a predetermined rule (for a specific rule, refer to the description in the embodiment related to FIG. 3), and the data number and the frame number are then sent together. For example, the data number and the frame number are encapsulated in the same encrypted information header and sent to the receiving end 200. The receiving end 200 parses the encrypted information header to obtain both the frame number and the data number. In this case, the encrypted information header is not sent once for each frame, but is sent once with each ciphertext (namely, each encrypted data segment). In this manner, when a decryption error occurs, correct decryption can be recovered more quickly. In other words, correct decryption is immediately recovered in a next data segment, to further improve reliability and fault tolerance during data transmission.

In another possible implementation, the sending end 100 sends both the frame number and the data number, but the frame number and the data number are sent separately. Specifically, each time a data frame is sent, the frame number is sent once; and each time each data segment in the data frame is sent, the data number is sent once. Each time a ciphertext of a data segment is sent, the data number is updated according to the predetermined rule, and the updated data number is then sent. In other words, when sending a data frame, the sending end 100 needs to send a frame number once and send a data number for a plurality of times. In this manner, when a decryption error occurs, correct decryption can be recovered more quickly. In other words, correct decryption is immediately recovered in a next data segment, to further improve reliability and fault tolerance during data transmission. In addition, costs of additionally sending a frame number and a data number are low.

**4d:** The sending end 100 encrypts a plaintext by using the initialization vector generated in step 4c to obtain a ciphertext, and the sending end 100 performs encryption by using a data segment as a minimum unit, where the plaintext represents an unencrypted data segment, and the ciphertext represents an encrypted data segment.

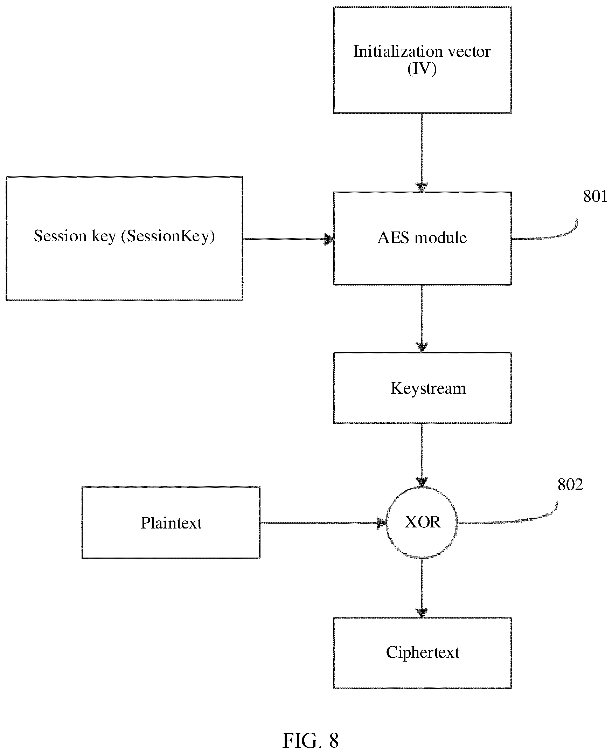

FIG. 8 shows a process of encrypting the plaintext (namely, the data segment) by using the initialization vector. The encryption process may be divided into two steps. First, a keystream is obtained by using the initialization vector and a session key, and then the plaintext is encrypted by using the keystream to obtain the ciphertext. The session key may be obtained through negotiation between the sending end 100 and the receiving end 200. For a specific negotiation method, refer to the embodiment related to FIG. 6.

801: The sending end 100 inputs the initialization vector and the session key into an AES module to obtain the keystream. The AES module is an advanced encryption standard (advanced encryption standard), encrypts a data segment with a packet size of 128 bits, and is a common encryption algorithm. In a possible implementation, the AES module may also encrypt a data segment with a packet size of 192 bits or 256 bits.

802: The sending end 100 performs an exclusive OR operation on the keystream generated in step 801 and the to-be-encrypted data segment (namely, the plaintext), to obtain the encrypted data segment (namely, the ciphertext). The exclusive OR operation refers to performing an exclusive OR operation bit by bit on the keystream and the plaintext. If the two values are different, an exclusive OR result is 1; or if the two values are the same, an exclusive OR result is 0.

**4e:** The sending end 100 sends the ciphertext obtained through encryption in step 4d to the receiving end 200. In a possible implementation, the sending end 100 directly sends the ciphertext to the receiving end 200. In another possible implementation, the sending end 100 does not directly send the ciphertext to the receiving end 200, but first sends the ciphertext to the server 300, and then the server 300 sends the ciphertext to the receiving end 200.

**4bb:** The receiving end 200 receives the ciphertext, where the ciphertext received by the receiving end may be sent by the sending end 100, or may be sent from the server 300.

**4cc:** The receiving end 200 generates the initialization vector by using the frame number and the data number, and when the frame number, the data number, and the random number are known, the receiving end 200 generates the initialization vector according to a method (refer to step 4c) the same as that of the sending end 100. Details are not described herein again.

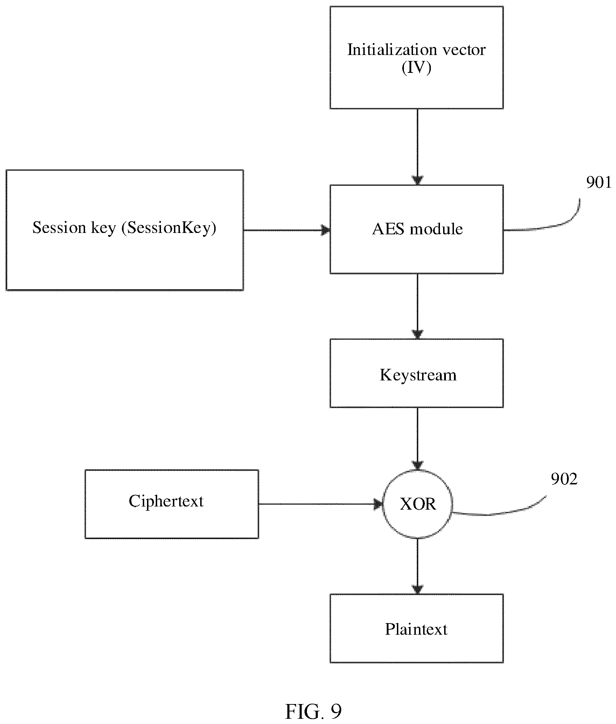

**4dd:** The receiving end 200 decrypts the ciphertext by using the initialization vector, to obtain the plaintext. FIG. 9 is a schematic flowchart in which the receiving end 200 decrypts the ciphertext by using the initialization vector and the session key to obtain the plaintext. Step 901 is the same as step 801 in FIG. 8. Details are not described herein again. An operation in step 902 is the same as that in step 802 in FIG. 8, but input content and an execution device are different. In step 802, an encryption module of the sending end 100 encrypts the input plaintext to obtain the ciphertext. However, in step 902, a decryption module of the receiving end 200 decrypts the input ciphertext to obtain the plaintext.

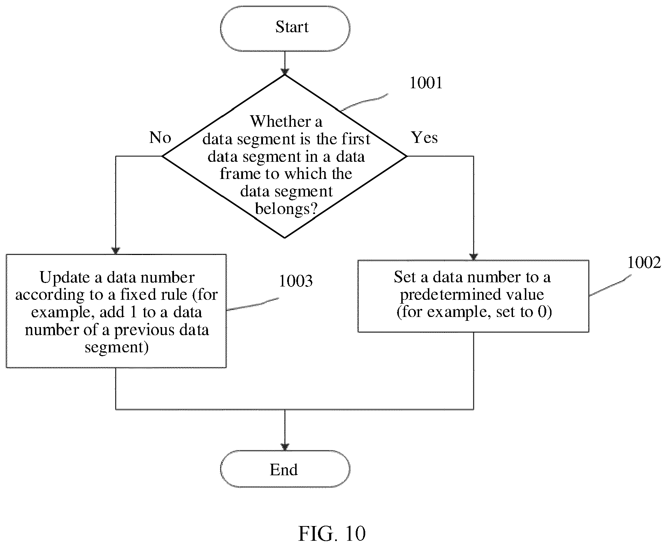

**4f:** The sending end 100 updates the data number according to the predetermined rule. For the predetermined rule, refer to the following description of the embodiment related to FIG. 10.

After the sending end 100 completes step 4f, if encryption of all data segments in the current data frame is not completed, the sending end 100 returns to step 4c to continue to encrypt and send a next data segment; or if encryption of all data segments in the current data frame is completed, the sending end 100 returns to step 4a to continue to encrypt and send a data segment in a next data frame.

In a possible implementation, a length of a data frame is fixed, and a length of a data segment is also fixed. Therefore, a quantity of data segments included in a data frame is fixed. When a data number reaches a threshold, the data number is reset to the foregoing initial value, where the threshold is related to the quantity of data segments included in the data frame. For example, when the initial value of the data number is 0, and an update rule of the data number is incrementing by 1 each time a ciphertext of a data segment is sent, the threshold is equal to the quantity of data segments included in the data frame.

**4ee:** The receiving end 200 updates the data number according to the predetermined rule. For the predetermined rule, refer to the following description of the embodiment related to FIG. 10.

It should be understood that, in all steps in FIG. 4, except that the step of sending the frame number/ciphertext by the sending end should be performed before the step of receiving the frame number/ciphertext by the receiving end, orders of performing other steps of the sending end and other steps of the receiving end respectively are not limited in this application, and the orders of performing the steps should be determined based on internal logic of the steps.

With reference to FIG. 6, the following describes a process in which the sending end 100 and the receiving end 200 negotiate the session key and the random number.

301: The sending end 100 generates the session key for encrypting data content and the random number. In a possible implementation, a length of the random number is 64 bits (64 bits), and the random number may be a pseudo-random number. In a possible embodiment, the session key and the random number may be generated by the server 300 and then sent to the sending end 100 and the receiving end 200 respectively.

302: The sending end 100 sends the session key and the random number to the receiving end 200. In a possible implementation, when the sending end 100 does not directly communicate with the receiving end 200, but transmits data through the server 300, the sending end 100 may send the session key and the random number to the server 300, and then the server 300 sends the session key and the random number to the receiving end 200.

303: The sending end 100 and the receiving end 200 confirm that the session key and the random number are consistent. In a possible implementation, if the session key and the random number are generated by the server 300 and then sent to the sending end 100 and the receiving end 200 respectively, the sending end 100 and the receiving end 200 do not need to confirm that the session key and the random number are consistent.

In a possible implementation, when the sending end 100 temporarily interrupts data encryption, if the communication connection between the sending end 100 and the receiving end 200 is not disconnected, the session key negotiated between the two ends is still valid. Once the communication connection between the sending end 100 and the receiving end 200 is disconnected, the session key negotiated between the sending end 100 and the receiving end 200 automatically becomes invalid. If the two ends need to continue secure communication, identity authentication needs to be performed again, and a new session key and a new random number need to be negotiated after a secure connection is re-established.

In a possible implementation, once a decryption error (where the decryption error may be caused by loss of a ciphertext or loss of a frame number) occurs at the receiving end 200, the receiving end 200 discards a subsequently received ciphertext until another frame number is received. Regardless of whether the counter is misplaced due to loss of the ciphertext or loss of the frame number, the decryption cannot be correctly performed. Once a new frame number is received, the frame numbers and the data numbers of the receiving end 200 and the sending end 100 are resynchronized, and a correctly synchronized counter and a correctly synchronized keystream are then generated.

Because the data number and/or the frame number are updated according to the predetermined rule, once a decryption error occurs, it means that ciphertexts of all remaining data segments in the data frame cannot correspond to correct data numbers and/or frame numbers. In other words, it may be determined that the ciphertexts of all the remaining data segments in the data frame cannot be correctly decrypted. In this case, other ciphertexts received subsequently are directly discarded, to prevent the receiving end from decrypting the ciphertexts that cannot be correctly decrypted, so that computing resources of the receiving end can be saved. However, after another frame number is received, it means that the sending end has encrypted all data segments in the data frame. Therefore, the frame numbers and the data numbers at the two ends are resynchronized, and the receiving end resumes a normal decryption operation, and decrypts the data frame corresponding to the another frame number.

According to the method provided in this application, the frame number is transmitted, and the sending end and the receiving end initialize and update the data number according to the same rule when encrypting or decrypting the same data frame, so that even if a ciphertext or a frame number is lost in the data transmission process, a decryption error can be limited to the current frame. Once a new frame number is received, correct decryption can continue to be performed, thereby resolving the problem in the current technology that transmission is unreliable and correct decryption cannot be recovered in time when a decryption error occurs.

With reference to FIG. 4, the foregoing describes in detail the process of encrypting and sending a data segment by the sending end 100 and the process of receiving and decrypting the data segment by the receiving end 200. With reference to FIG. 10, the following describes an embodiment of how the sending end and the receiving end determine data numbers and keep synchronization of the data numbers.

1001: First, determine whether a data segment X is the first encrypted data segment in a data frame to which the data segment X belongs, where data numbers for encrypting other data segments in a data frame need to be determined based on a data number of the first encrypted data segment in the data frame.

1002: If the data segment X is the first encrypted data segment in a plurality of data segments included in the data frame to which the data segment X belongs, set a data number for encrypting the data segment X to an initial value. The initial value may be set after the last data segment of a previous data frame is encrypted, or may be set at a time point before the data segment X is encrypted. For example, the data number for encrypting the data segment X may be set to 0 or any other non-negative number that does not exceed a range that can be represented by a length of the data number.

1003: If the data segment X is not the first encrypted data segment in the plurality of data segments included in the data frame to which the data segment X belongs, obtain the data number for encrypting the data segment X through update according to a predetermined rule based on the data number for encrypting the previous data segment, for example, by adding 1 or any other positive number to the data number for encrypting the previous data segment.

In a possible implementation, both the sending end 100 and the receiving end 200 obtain the data number by using the method described in the embodiment related to FIG. 10, to implement synchronization of the data number between the two ends.

In the method provided in this application, the data number is updated in the range of the data frame to which the data number belongs according to the predetermined rule. For example, each time a data segment in the data frame is encrypted, the sending end updates the data number according to the predetermined rule. Correspondingly, each time the receiving end decrypts a ciphertext of a data segment in the data frame, the receiving end also updates the data number maintained by the receiving end according to the same rule. Once the sending end 100 completes encryption of all the data segments in the data frame, or sends a new frame number (in other words, enters an encryption process of another data frame), the data number is reset to the initial value. In other words, the data number maintained by the sending end adopts an intra-frame counting manner. Once the receiving end 200 completes decryption of all the data segments in the data frame, or receives a new frame number (in other words, enters a decryption process of another data frame), the data number is reset to the initial value. In other words, the data number maintained by the receiving end also adopts the intra-frame counting manner. Therefore, if the data number of the receiving end cannot be synchronized with the data number of the sending end (in other words, a same data segment is encrypted and decrypted by using different data numbers respectively) due to loss of a ciphertext, and decryption cannot be correctly performed, this problem can be resolved immediately after a new frame number is received. This is because once receiving a new frame number, the receiving end 200 resets the value of the data number to the initial value and starts counting again. The new frame number and the new data number may be combined to obtain a new and accurately synchronized counter, to recover a correct decryption process of the data.

In addition to limiting a decryption error to a range of one data frame and quickly recovering correct decryption in a next data frame, in the method provided in this application, correct re-synchronization of the counter does not need to be implemented through disconnecting and identity re-authentication, to reduce communication overheads, and reduce time for recovering correct decryption. The user cannot even perceive that a decryption error occurs, thereby effectively improving user experience.

In another possible implementation, the sending end 100 determines the data number according to the method described in the embodiment related to FIG. 10, to encrypt the data segment. The sending end 100 further sends the data number to the receiving end 200, to implement synchronization of the data number. In an embodiment, when the encrypted information header includes both the frame number and the data number, the data number may still use the same intra-frame counting rule of the sending end and the receiving end, or may not use the intra-frame counting rule any more, as long as the data numbers maintained by the sending end and the receiving end have the same initial value and use the same rule for counting.

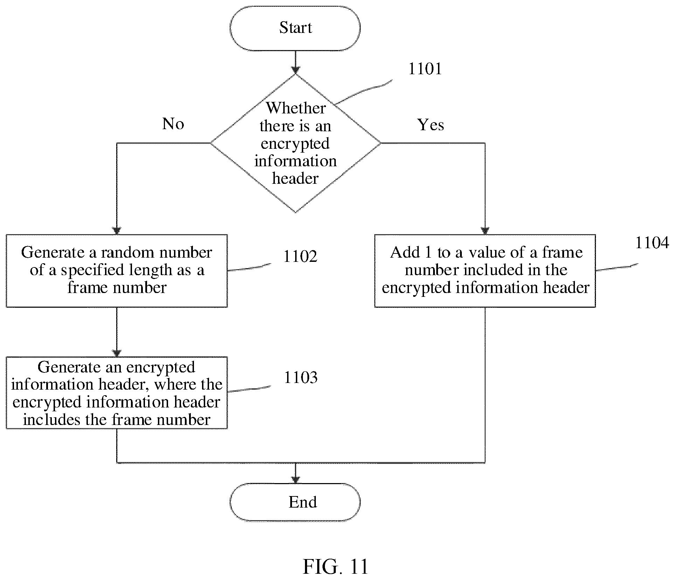

With reference to FIG. 11, the following describes a possible method for obtaining a frame number by the sending end 100 according to this application.

1101: The sending end 100 first determines whether an encrypted information header exists. In a possible implementation, if a to-be-encrypted data frame is the first frame in transmitted data content, the sending end 100 does not have an encrypted information header; otherwise, the sending end 100 has an encrypted information header.

1102: Generate a random number of a specified length as an initial value of a frame number if the sending end 100 does not have an encrypted information header. The length of the random number is determined by a length of an FN field in the encrypted information header. In a possible embodiment, the generated random number may be a pseudo random number.

1103: When the sending end 100 does not have an encrypted information header, after the random number is generated as the initial value of the frame number as described in step 1102, the sending end 100 generates an encrypted information header. A structure of the encrypted information header is described in the embodiment related to FIG. 5, and details are not described herein again.

1104: If the sending end 100 has an encrypted information header, in a possible implementation, when a new data frame is encrypted, a new encrypted information header may not be generated, and only the frame number in the existing encrypted information header needs to be updated. For example, as shown in FIG. 11, a value of the frame number included in the encrypted information header is increased by 1, or a value of the frame number is increased by any other positive number.

In another possible implementation, even if the sending end 100 has an encrypted information header, a new encrypted information header is generated when a new data frame is encrypted. The FN field in the encrypted information header changes with the data frame. For example, the FN field may be a frame number of a data frame corresponding to a previous encrypted information header plus 1 or any other positive number.

According to the secure data transmission method provided in embodiments of this application, the frame numbers are synchronized between the sending end and the receiving end by sending the frame numbers, and the data numbers are synchronized between the sending end and the receiving end through intra-frame counting of the data numbers. Through intra-frame counting of the sending frame numbers and the data numbers, the counters of the sending end and the receiving end can be resynchronized before each data frame is sent. In this way, even if the counters are not synchronized, correct synchronization can be recovered when the next data frame is sent. In this way, even if content of a frame is incorrectly decrypted, correct decryption can be recovered for a next frame.

Based on the secure data transmission method provided in the foregoing embodiments, an embodiment of this application further provides an electronic device 400, including one or more functional units configured to perform the secure data transmission method described in the foregoing embodiments. Such functional units may be implemented by software, hardware such as a processor, or a proper combination of software, hardware, and/or firmware. For example, some functions are implemented by a processor by executing a computer program, and some functions are implemented by a wired communication module (for example, an HDMI interface).

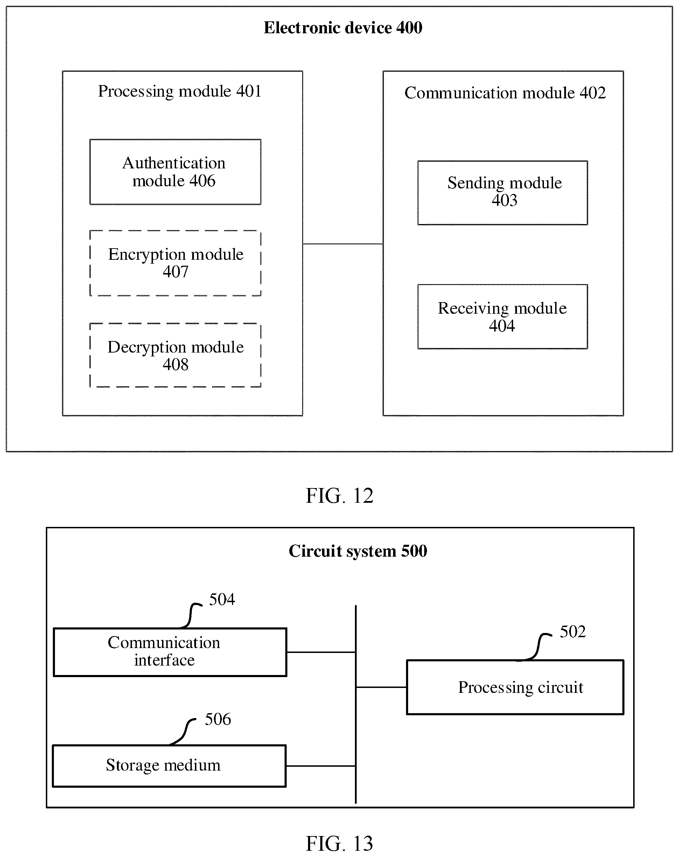

In an embodiment, as shown in FIG. 12, the electronic device 400 includes a processing module 401 and a communication module 402. The processing module is configured to encrypt a data frame, and may be specifically the processor 101 in the embodiment shown in FIG. 2, or may be a processing circuit configured to implement an encryption and/or decryption function. The processing circuit may be implemented as one or more processors, one or more controllers, and/or another structure that can be used to execute a program. The processing circuit may further include at least one of a general purpose processor, a digital signal processor (DSP), an application-specific integrated circuit (ASIC), a field programmable gate array (FPGA), or another programmable logic component. The general purpose processor may include a microprocessor, and any conventional processor, controller, microcontroller or state machine. The processing circuit may also be implemented as a computing component, for example, a combination of a DSP and a microprocessor. The communication module 402 is configured to connect the electronic device 400 to another electronic device or a network. For specific implementation of the communication module, refer to the description of the related embodiment of the communication module 103 in FIG. 2, and details are not described herein again. In terms of functions, the communication module 402 may include a sending module 403 and/or a receiving module 404. The sending module 402 is configured to send data to another electronic device or a network, and the receiving module 403 is configured to receive data sent from another electronic device or a network to the electronic device 400.

In an embodiment, the communication module 402 may be any similar apparatus such as a transceiver configured to perform wired and/or wireless communication with another device or a communication network, for example, an Ethernet interface, a USB interface, a DVI interface, an HDMI interface, a video VGA interface, a GVIF interface, or a UDI interface. In another embodiment, the communication module 402 may include at least one of the wired communication module 1031 and the wireless communication module 1032 in the embodiment shown in FIG. 2.

The processing module 401 includes at least an authentication module 406. The authentication module 406 is configured to perform authentication on an identity of another electronic device communicating with the electronic device 400, and negotiate a session key by invoking the communication module 402.

In an embodiment, the electronic device 400 is a data sending end. Before sending encrypted data, the electronic device 400 may verify, through a protocol, whether the receiving end obtains permission to receive the encrypted data content. The electronic device 400 transmits the encrypted data to the receiving end only after determining validity of the receiving end. In addition, the authentication module 406 may also identify whether the receiving end is attacked, revoke or update identity authentication of the receiving end, and prevent transmission of encrypted content. After verifying the valid identity of the receiving end, the electronic device 400 may negotiate a session key through the authentication module 406, where the negotiated session key is for encrypting data content to be transmitted (for a specific negotiation process, refer to the description in the related embodiment in FIG. 6). The processing module 401 of the electronic device 400 serving as the data sending end further includes an encryption module 407, configured to implement data encryption. The encrypted data is sent through the sending module 403 (for a data encryption method, refer to the descriptions of the embodiments related to FIG. 7 and FIG. 8). The encryption module 407 uses a symmetric key encryption transmission manner. In other words, the electronic device 400 and the receiving end use a same keystream. To ensure that encrypted data can be correctly decrypted at the receiving end, synchronization of the keystream is extremely important. The technical solutions provided in the present invention can effectively ensure synchronization of the key stream, to ensure correct data decryption.

The encryption module 407 is configured to perform, process, prepare, or provide various encryption operations. The encryption module 407 may be implemented by the processor 101 shown in FIG. 2. Alternatively, the encryption module 407 may be implemented by using the instructions that are stored in the memory 102 shown in FIG. 2 and executed by the processor 101 shown in FIG. 2. Alternatively, the encryption module 407 may be implemented as a separate chip, or may form a system-on-a-chip or an integrated circuit together with another chip or circuit. Such chips or integrated circuits may be applied to all electronic devices that implement wired and/or wireless communication functions, including a mobile phone, a notebook computer, a desktop computer, a tablet computer, a digital conference system, a wearable device, a vehicle-mounted device, and the like.

In an embodiment, the electronic device 400 is a data receiving end. In this case, the authentication module 406 is configured to perform mutual authentication and negotiate a session key between the electronic device 400 and the sending end.

The processing module 401 of the electronic device 400 serving as the data receiving end further includes a decryption module 408, configured to decrypt data received by the receiving module 404 of the electronic device 400 (for a data decryption method, refer to the descriptions in the embodiments related to FIG. 7 and FIG. 9).

In an embodiment, the electronic device 400 may be a data sending end, or may be a data receiving end. In this case, the processing module 401 of the electronic device 400 includes both the encryption module 407 and the decryption module 408.

It should be understood that, as used in any embodiment of this specification, the term "module" may refer to software, firmware, and/or a circuit configured to perform any one of the foregoing operations. The software may be embodied as software packages, code, instruction sets, and/or data recorded on a non-transitory computer-readable storage medium. The firmware may be embodied as code, instructions or instruction sets, and/or data hard-coded in a memory (for example, non-volatile) device. Circuits used in any embodiment of this specification, for example, may include, individually or in any combination, a hardwired circuit, and a programmable circuit, for example, a computer processor including one or more separate instruction processing cores, a state machine circuit, and/or firmware storing instructions executed by the programmable circuit. Such modules may be implemented collectively or individually as circuits that form a large part of a system, such as an integrated circuit (IC), a system-on-a-chip (SoC), a desktop computer, a laptop computer, a tablet computer, a server, a smartphone, and the like.

An embodiment of this application further provides a circuit system 500. As shown in FIG. 13, the circuit system 500 includes a processing circuit 502, and a communication interface 504 and a storage medium 506 that are connected to the processing circuit.

The processing circuit 502 is configured to: process data, control data access and storage, send a command, and control another component to perform an operation, to implement or control the another component to implement the secure data transmission method provided in embodiments of this specification. The processing circuit 502 may be implemented as one or more processors, one or more controllers, and/or another structure that can be used to execute a program. The processing circuit 502 may further include at least one of a general purpose processor, a digital signal processor (DSP), an application-specific integrated circuit (ASIC), a field programmable gate array (FPGA), or another programmable logic component. The general purpose processor may include a microprocessor, and any conventional processor, controller, microcontroller or state machine. The processing circuit 502 may also be implemented as a computing component, for example, a combination of a DSP and a microprocessor.

The storage medium 506 may include a non-transitory computer-readable storage medium (non-transitory computer-readable storage medium), for example, a magnetic storage device (for example, a hard disk, a floppy disk, or a magnetic strip), an optic storage medium (for example, a digital versatile disc (DVD)), a smart card, a flash memory, a random access memory (RAM), a read-only memory (ROM), a programmable ROM (PROM), an erasable PROM (EPROM), a register, and any combination thereof. The storage medium 506 may be coupled to the processing circuit 502, so that the processing circuit 502 can read information and write the information to the storage medium 506. Specifically, the storage medium 506 may be integrated into the processing circuit 502, or the storage medium 506 and the processing circuit 502 may be separated.

The communication interface 504 may include a circuit and/or a program to implement bidirectional communication between the circuit system 500 and one or more other electronic devices or network devices (for example, a display screen, a projector, a router, a switch, or an access point), or the communication interface 504 may be configured to implement bidirectional communication between the circuit system 500 and another component in a device to which the circuit system belongs. The communication interface 504 includes at least one receiving circuit and/or at least one transmitting circuit. In an embodiment, the communication interface 504 may be implemented by a wired and/or wireless module.

The storage medium 506 stores various data, for example, system data, data in a running process of various applications, and to-be-encrypted/decrypted data. In an embodiment, the storage medium 506 stores a computer program, and the processing circuit 502 is adapted to execute the computer program stored in the storage medium 506, to implement some or all of the steps in any one of the embodiments shown in FIG. 4 and FIG. 6 to FIG. 11.

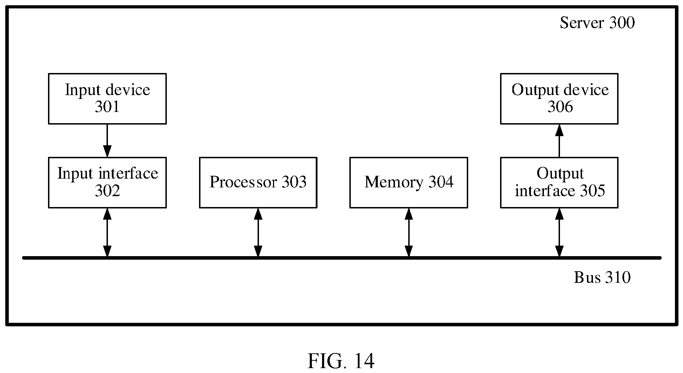

FIG. 14 is a structural diagram of an example of a hardware architecture of a server 300 that can be used to implement secure data transmission according to an embodiment of this application. As shown in FIG. 14, the server 300 may include an input device 301, an input interface 302, a processor 303, a memory 304, an output interface 305, and an output device 306. The input interface 302, the processor 303, the memory 304, and the output interface 305 are connected to each other through a bus 310. The input device 301 and the output device 306 are connected to the bus 310 respectively through the input interface 302 and the output interface 305, and are further connected to another component of the server 300. The memory 304 stores an executable program. The processor 303 includes one or more processing units, for example, a plurality of processor cores. When executing computer-executable instructions, the processor 303 can implement functions of the secure data transmission method or system described in the foregoing embodiments.

It should be noted that terms "executable program", "computer program", and "program" are used in embodiments of this application. It should be widely interpreted as including but not limited to: instructions, instruction sets, code, code segments, subprograms, software modules, applications, software packages, threads, processes, functions, firmware, middleware, and the like. It may be clearly understood by a person skilled in the art that, for the purpose of convenient and brief description, for a detailed working process of the foregoing apparatus and unit, refer to a corresponding process in the foregoing method embodiments, and details are not described herein again.

In the several embodiments provided in this application, it should be understood that, the disclosed apparatus and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store an executable program, such as a USB flash drive, a removable hard disk, a read-only memory ROM, a random access memory RAM, a magnetic disk, or an optical disc.

In addition, it should be understood that there are a plurality of methods for implementing the present invention, for example, a computer program product that includes several instructions for enabling an electronic device to perform all or some of the steps of the method described in embodiments of this application. The computer program product may be specifically in a form of an independent or downloadable software object, a control, a toolbox, driver code, an operating system, an appropriate API, or the like.

Therefore, various implementations described in this application may have aspects that are entirely in hardware, partly in hardware and partly in software, and entirely in software.

## Claims

1. A data transmission method, comprising:
sending a frame number, wherein the frame number indicates a data frame, and the data frame comprises a plurality of unencrypted data segments that comprise a data segment X; and
sending a ciphertext of the data segment X, wherein the ciphertext of the data segment X is obtained by encrypting the data segment X based on the frame number and a data number, the data number has an initial value, the data number is updated according to a predetermined rule after the data segment X is encrypted, and after all the data segments in the data frame are encrypted, the data number is reset to the initial value.

2. The method according to claim 1, wherein the data segment X is the first encrypted data segment in the plurality of data segments, and the initial value of the data number is for encrypting the data segment X.

3. The method according to claim 1, wherein the data segment X is not the first encrypted data segment in the plurality of data segments, an updated value of the data number is for encrypting the data segment X, and the updated value of the data number is obtained through updating based on the initial value according to the predetermined rule.

4. The method according to any one of claims 1 to 3, further comprising:
generating an initialization vector based on the frame number and the data number; and
encrypting the data segment X based on the initialization vector to obtain the ciphertext of the data segment X.

5. The method according to claim 4, wherein the generating an initialization vector based on the frame number and the data number comprises:
concatenating the frame number and the data number to obtain a counter; and
concatenating the counter and a pre-generated random number to obtain the initialization vector.

6. The method according to claim 4 or 5, wherein the encrypting the data segment X based on the initialization vector to obtain the ciphertext of the data segment X comprises:
inputting the initialization vector and a session key into an advanced encryption standard AES unit to obtain a keystream; and
performing an exclusive OR operation on the keystream and the data segment X to obtain the ciphertext of the data segment X.

7. The method according to any one of claims 1 to 6, wherein when a value of the data number is equal to a first threshold, it indicates that all the data segments in the data frame are encrypted.

8. A data transmission method, comprising:
receiving a frame number, wherein the frame number indicates a data frame, and the data frame comprises a plurality of data segments that comprise a data segment X;
receiving a ciphertext of the data segment X; and
decrypting the ciphertext of the data segment X based on the frame number and a data number to obtain a plaintext of the data segment X, wherein the data number has an initial value, the data number is updated according to a predetermined rule after the ciphertext of the data segment X is decrypted, and after ciphertexts of all the data segments in the data frame are decrypted, the data number is reset to the initial value.

9. The method according to claim 8, wherein the ciphertext of the data segment X is the first decrypted ciphertext in the ciphertexts of the plurality of data segments, and the initial value of the data number is for decrypting the ciphertext of the data segment X.

10. The method according to claim 8, wherein the ciphertext of the data segment X is not the first decrypted ciphertext in the ciphertexts of the plurality of data segments, an updated value of the data number is for decrypting the ciphertext of the data segment X, and the updated value of the data number is obtained through updating based on the initial value according to the predetermined rule.

11. The method according to any one of claims 8 to 10, wherein the decrypting the ciphertext of the data segment X based on the frame number and a data number comprises:
generating an initialization vector based on the frame number and the data number; and
decrypting the ciphertext of the data segment X based on the initialization vector.

12. The method according to claim 11, wherein the generating an initialization vector based on the frame number and the data number comprises:
concatenating the frame number and the data number to obtain a counter; and
concatenating the counter and a random number to obtain the initialization vector.

13. The method according to claim 11 or 12, wherein the decrypting the ciphertext of the data segment X based on the initialization vector comprises:
inputting the initialization vector and a session key into an advanced encryption standard AES unit to obtain a keystream; and
performing an exclusive OR operation on the keystream and the ciphertext of the data segment X to obtain the plaintext of the data segment X.

14. The method according to any one of claims 8 to 13, wherein when another frame number is received, it indicates that the ciphertexts of all the data segments in the data frame are decrypted.

15. A data transmission method, comprising:
sending, by a sending end, a frame number to a receiving end, wherein the frame number indicates a data frame, and the data frame comprises a plurality of data segments that comprise a data segment X;
sending, by the sending end, a ciphertext of the data segment X to the receiving end, wherein the ciphertext of the data segment X is obtained by encrypting the data segment X based on the frame number and a data number of the sending end, the data number of the sending end has an initial value, the data number of the sending end is updated according to a predetermined rule after the data segment X is encrypted, and after all the data segments in the data frame are encrypted, the data number of the sending end is reset to the initial value;
receiving, by the receiving end, the frame number and the ciphertext of the data segment X; and
decrypting, by the receiving end, the ciphertext of the data segment X based on the frame number and a data number of the receiving end to obtain a plaintext of the data segment X, wherein the data number of the receiving end has an initial value the same as that of the data number of the sending end, the data number of the receiving end is updated according to the predetermined rule after the ciphertext of the data segment X is decrypted, and after ciphertexts of all the data segments in the data frame are decrypted, the data number of the receiving end is reset to the initial value.

16. The method according to claim 15, wherein the data segment X is the first encrypted data segment in the plurality of data segments, the initial value of the data number of the sending end is for encrypting the data segment X, the data number of the sending end is updated based on the initial value according to the predetermined rule after the data segment X is encrypted, and the updated data number is for encrypting a next data segment.

17. The method according to claim 16, wherein after the receiving end decrypts the ciphertext of the data segment X, the data number of the receiving end is updated based on the initial value according to the predetermined rule, and the updated data number of the receiving end is for decrypting a ciphertext of the next data segment.

18. The method according to claim 15, wherein the data segment X is the last encrypted data segment in the plurality of data segments, and the method further comprises:
resetting, by the sending end after encrypting the data segment X, the data number of the sending end to the initial value.

19. The method according to claim 18, wherein the method further comprises: resetting, by the receiving end after decrypting the ciphertext of the data segment X, the data number of the receiving end to the initial value.

20. The method according to any one of claims 15 to 17, wherein when the receiving end receives another frame number, it indicates that the ciphertexts of all the data segments in the data frame are decrypted.

21. The method according to any one of claims 15 to 20, wherein the predetermined rule is configured for both the sending end and the receiving end.

22. A data transmission apparatus, comprising:
a processing module, configured to encrypt a data segment X based on a frame number and a data number to obtain a ciphertext of the data segment X, wherein the frame number indicates a data frame, and the data frame comprises a plurality of data segments that comprise the data segment X; and
a communication module, configured to send the frame number and send the ciphertext of the data segment X, wherein
the data number has an initial value, the data number is updated according to a predetermined rule after the data segment X is encrypted, and after all the data segments in the data frame are encrypted, the data number is reset to the initial value.

23. The apparatus according to claim 22, wherein the data segment X is the first encrypted data segment in the plurality of data segments, and the initial value of the data number is for encrypting the data segment X.

24. The apparatus according to claim 22, wherein the data segment X is not the first encrypted data segment in the plurality of data segments, an updated value of the data number is for encrypting the data segment X, and the updated value of the data number is obtained through updating based on the initial value according to the predetermined rule.

25. The apparatus according to any one of claims 22 to 24, wherein the processing module is further configured to: generate an initialization vector based on the frame number and the data number; and encrypt the data segment X based on the initialization vector to obtain the ciphertext of the data segment X.

26. The apparatus according to claim 25, wherein the processing module is further configured to: concatenate the frame number and the data number to obtain a counter; and concatenate the counter and a pre-generated random number to obtain the initialization vector.

27. The apparatus according to claim 25 or 26, wherein the processing module is further configured to: input the initialization vector and a session key into an advanced encryption standard AES unit to obtain a keystream; and perform an exclusive OR operation on the keystream and the data segment X to obtain the ciphertext of the data segment X.

28. The apparatus according to any one of claims 22 to 27, wherein when a value of the data number is equal to a first threshold, it indicates that all the data segments in the data frame are encrypted.

29. A data transmission apparatus, comprising:
a communication module, configured to receive a frame number, wherein the frame number indicates a data frame, and the data frame comprises a plurality of data segments that comprise a data segment X, wherein
the communication module is further configured to receive a ciphertext of the data segment X; and
a processing module, configured to decrypt the ciphertext of the data segment X based on the frame number and a data number to obtain a decrypted plaintext of the data segment X, wherein the data number has an initial value, the data number is updated according to a predetermined rule after the ciphertext of the data segment X is decrypted, and after ciphertexts of all the data segments in the data frame are decrypted, the data number is reset to the initial value.

30. The apparatus according to claim 29, wherein the ciphertext of the data segment X is the first decrypted ciphertext in the ciphertexts of the plurality of data segments, and the initial value of the data number is for decrypting the ciphertext of the data segment X.

31. The apparatus according to claim 29, wherein the ciphertext of the data segment X is not the first decrypted ciphertext in the ciphertexts of the plurality of data segments, an updated value of the data number is for decrypting the ciphertext of the data segment X, and the updated value of the data number is obtained through updating based on the initial value according to the predetermined rule.

32. The apparatus according to any one of claims 29 to 31, wherein the processing module is further configured to: generate an initialization vector based on the frame number and the data number; and decrypt the ciphertext of the data segment X based on the initialization vector.

33. The apparatus according to claim 32, wherein the processing module is further configured to: concatenate the frame number and the data number to obtain a counter; and concatenate the counter and a pre-generated random number to obtain the initialization vector.

34. The apparatus according to claim 32 or 33, wherein the processing module is further configured to: input the initialization vector and a session key into an advanced encryption standard AES unit to obtain a keystream; and perform an exclusive OR operation on the keystream and the data segment X to obtain the ciphertext of the data segment X.

35. The apparatus according to any one of claims 29 to 34, wherein when another frame number is received, it indicates that the ciphertexts of all the data segments in the data frame are decrypted.

36. A data transmission system, comprising:
a sending apparatus and a receiving apparatus, wherein
the sending apparatus is configured to send a frame number to the receiving apparatus, wherein the frame number indicates a data frame, and the data frame comprises a plurality of data segments that comprise a data segment X;
the sending apparatus is further configured to send a ciphertext of the data segment X to the receiving apparatus, wherein the ciphertext of the data segment X is obtained by encrypting the data segment X based on the frame number and a data number of the sending apparatus, the data number of the sending apparatus has an initial value, the data number of the sending apparatus is updated according to a predetermined rule after the data segment X is encrypted, and after all the data segments in the data frame are encrypted, the data number of the sending apparatus is reset to the initial value; and
the receiving apparatus is configured to receive the frame number and the ciphertext of the data segment X, and decrypt the ciphertext of the data segment X based on the frame number and a data number of the receiving apparatus to obtain a plaintext of the data segment X, wherein the data number of the receiving apparatus has an initial value the same as that of the data number of the sending apparatus, the data number of the receiving apparatus is updated according to the predetermined rule after the ciphertext of the data segment X is decrypted, and after ciphertexts of all the data segments in the data frame are decrypted, the data number of the receiving apparatus is reset to the initial value.

37. The system according to claim 36, wherein the data segment X is the first encrypted data segment in the plurality of data segments, the initial value of the data number of the sending apparatus is for encrypting the data segment X, the data number of the sending apparatus is updated based on the initial value according to the predetermined rule after the data segment X is encrypted, and the updated data number of the sending apparatus is for encrypting a next data segment.

38. The system according to claim 37, wherein after the receiving apparatus decrypts the ciphertext of the data segment X, the data number of the receiving apparatus is updated based on the initial value according to the predetermined rule, and the updated data number of the receiving apparatus is for decrypting a ciphertext of the next data segment.

39. The system according to claim 36, wherein the data segment X is the last encrypted data segment in the plurality of data segments, and the sending apparatus is further configured to reset the data number of the sending apparatus to the initial value after encrypting the data segment X.

40. The system according to claim 39, wherein the receiving apparatus is further configured to reset the data number of the receiving apparatus to the initial value after decrypting the ciphertext of the data segment X.

41. A data transmission system, comprising:
the data transmission apparatus according to any one of claims 22 to 28 and the data transmission apparatus according to any one of claims 29 to 35.

42. A computer apparatus, comprising: a memory, configured to store one or more data frames; and the data transmission apparatus according to any one of claims 22 to 28, configured to encrypt the data frame stored in the memory.

43. A computer apparatus, comprising: a memory, configured to store one or more ciphertexts; and the data transmission apparatus according to any one of claims 29 to 35, configured to decrypt the ciphertext.

44. A computer-readable storage medium, storing a computer program/instructions, wherein when the computer program/instructions are executed by a processor, the steps of the method according to any one of claims 1 to 7 are implemented.

45. A computer-readable storage medium, storing a computer program/instructions, wherein when the computer program/instructions are executed by a processor, the steps of the method according to any one of claims 8 to 14 are implemented.

46. A computer program product, comprising a computer program/instructions, wherein when the computer program/instructions are executed by a processor, the steps of the method according to any one of claims 1 to 7 are implemented.

47. A computer program product, comprising a computer program/instructions, wherein when the computer program/instructions are executed by a processor, the steps of the method according to any one of claims 8 to 14 are implemented.
